**Europäisches Patentamt**

**European Patent Office**

**Office européen des brevets**

(19)

(11) Veröffentlichungsnummer : **0 388 613 B1**

(12)

# EUROPÄISCHE PATENTSCHRIFT

(45) Veröffentlichungstag der Patentschrift :
**29.07.92 Patentblatt 92/31**

(51) Int. Cl.$^5$ : **F02K 9/78,** F02K 7/18,
F02K 3/072, F02C 3/13,
F02C 3/073

(21) Anmeldenummer : **90102216.0**

(22) Anmeldetag : **05.02.90**

(54) **Kombinationsantrieb für Fluggeschwindigkeiten von Unter - bis Hyperschall.**

(30) Priorität : **18.03.89 DE 3909050**

(43) Veröffentlichungstag der Anmeldung :
**26.09.90 Patentblatt 90/39**

(45) Bekanntmachung des Hinweises auf die
Patenterteilung :
**29.07.92 Patentblatt 92/31**

(84) Benannte Vertragsstaaten :
**DE FR GB IT**

(56) Entgegenhaltungen :
EP-A- 0 333 585
DE-A- 3 005 864
DE-A- 3 738 703
DE-C- 3 617 915
FR-A- 1 280 103

(73) Patentinhaber : **Messerschmitt-Bölkow-Blohm
Gesellschaft mit beschränkter Haftung
Robert-Koch-Strasse
W-8012 Ottobrunn (DE)**

(72) Erfinder : **Lifka, Hans, Dipl.-Ing.
Pessenbach 17
W-8113 Kochel (DE)**

EP 0 388 613 B1

## Beschreibung

Die Erfindung betrifft einen Kombinationsantrieb für Fluggeschwindigkeiten von Unter- bis Hyperschall, gemäß dem Oberbegriff des Patentanspruches 1.

Bei Hyperschall-Fluggeräten, wie z.B. dem Sänger-Projekt, liegt ein Hauptproblem in der Wahl eines geeigneten Antriebes. Gegenüber gewöhnlichen Militär- und Verkehrsflugzeugen sind dabei insbesondere der wesentlich größere Fluggeschwindigkeitsbereich sowie der größere Flughöhenbereich, verbunden mit einer entsprechenden Variation der Umgebungsbedingungen (Druck, Temperatur etc.), zu beachten. Im Hinblick auf große Reichweiten spielt natürlich auch der Wirkungsgrad eines Antriebes eine entscheidende Rolle.

Man geht inzwischen davon aus, daß eine Triebwerksart nicht genügt, um die gestellten Anforderungen ausreichend zu erfüllen. Somit ergibt sich der Zwang, Kombinationsantriebe aus zwei oder mehr Triebwerksarten zu verwenden.

In niedrigen bis mäßigen Flughöhen mit ausreichendem Umgebungsluftdruck ist es sinnvoll, luftatmende Triebwerke zu verwenden, welche den Luftsauerstoff als Oxidator nutzen können. Für einen Geschwindigkeitsbereich von Unter- bis Überschall bieten sich hierbei Turboluftstrahltriebwerke an. Eine spezielle Bauart, deren Betriebsverhalten von den Umgebungsbedingungen relativ unabhängig ist, ist die "Air-Turbo-Rocket". Bei dieser Triebwerksart erfolgt der Antrieb des Verdichters durch eine außenluftunabhängige Turbine, welche mit Treibgasen aus einer Raketenbrennkammer beaufschlagt wird. Gegenüber herkömmlichen Gasturbinentriebwerken ist die Air-Turbo-Rocket somit für einen größeren Fluggeschwindigkeits- und Flughöhenbereich geeignet, wobei sie im Unterschallbereich allerdings mit einem schlechteren Wirkungsgrad arbeitet.

Für noch höhere Fluggeschwindigkeiten in genügend sauerstoffhaltiger Atmosphäre eignen sich Staustrahltriebwerke mit Unter- oder Überschallverbrennung (Ramjets oder Scramjets).

Für höchste Fluggeschwindigkeiten und außenluftunabhängigen Betrieb bieten sich schließlich Raketentriebwerke in Haupt- oder Nebenstrombauart an. Da für diese der Oxidator als Ballast im Fluggerät mitgeführt werden muß, werden sie sinnvollerweise nur in großen Flughöhen bzw. im luftleeren Raum eingeschaltet.

Aus der DE-PS 36 17 915 ist ein Kombinationsantrieb bekannt, welcher aus einem Raketentriebwerk, einem Staustrahltriebwerk und einem Turboluftstrahltriebwerk in Form einer Air-Turbo-Rocket besteht.

Die Antriebsturbine des Verdichters der Air-Turbo-Rocket dient auch als Antrieb für die Treibstoffpumpen des Raketentriebwerkes. Aus diesem Grunde ist es erforderlich, zwischen Turbine und Verdichter eine Kupplung anzuordnen, welche im Raketenbetrieb die Leistungsübertragung zum Verdichter unterbricht. Das Turboluftstrahltriebwerk und das Staustrahltriebwerk sind zu einem integralen Luftstrahltriebwerk zusammengefaßt und weisen einen gemeinsamen Strömungskanal für die zuströmende Außenluft auf. Im Staustrahlbetrieb wird der Axial-Niederdruckverdichter von seiner Antriebsturbine abgekoppelt, seine Beschaufelung wird in eine widerstandsarme Stellung verschwenkt (Segelstellung). Der Verdichter ist also mit verstellbaren Laufschaufeln ausgestattet und stellt aufgrund des hohen Leistungsumsatzes, der beachtlichen Größenverhältnisse, der hohen Drehzahlen etc. ein festigkeitsmäßig und konstruktiv äußerst kritisches Bauteil dar, welches durch die verstellbare Bauweise auch deutlich schwerer ist als nicht-verstellbare Ausführungen. Aufgrund der hohen, zu übertragenden Leistung stellt auch die Kupplung ein kritisches Bauteil mit beachtlichem Gewicht dar. Somit wirkt sich die verstellbare Verdichterausführung mit Kupplung nachteilig auf die Kosten (Fertigung, Wartung), das Gewicht und somit die Nutzlast, sowie auf die Zuverlässigkeit aus.

Aus der DE-OS 37 38 703 ist ein Kombinationsantrieb aus einem Zweikreis-Gasturbinenstrahltriebwerk und einem Staustrahltriebwerk bekannt, bei welchem der äußere Strömungskreis des Gasturbinenstrahltriebwerkes dem Strömungskreis des Staustrahltriebwerkes entspricht. Im Turbobetrieb wird die Luft im äußeren Strömungskreis mittels eines Fans mit zwei gegenläufig arbeitenden, leitschaufellosen Laufrädern beschleunigt. Der Antrieb der Laufräder erfolgt durch zwei Turbinen im inneren Strömungskreis des Gasturbinenstrahltriebwerkes. Im Staustrahlbetrieb wird der innere Strömungskreis verschlossen, die Schaufeln des Fans werden in Segelstellung verschwenkt.

Im Vergleich zur DE-PS 36 17 915 ist hier zwar keine Kupplung zwischen Turbine und Fan erforderlich, es müssen aber beide Fan-Laufräder mit verstellbaren Schaufeln versehen sein, was ebenfalls zu den bereits erwähnten Nachteilen führt. Hinzu kommt noch, daß das Zweikreis-Gasturbinenstrahltriebwerk wesentlich aufwendiger, schwerer und anfälliger ist als eine Air-Turbo-Rocket. Ein außenluftunabhängiger Betrieb ist mit der letztbeschriebenen Lösung (nur Turbo- und Staustrahlbetrieb) überhaupt nicht möglich.

Gegenüber diesen bekannten Lösungen besteht die Aufgabe der Erfindung darin, einen Kombinationsantrieb für Fluggeschwindigkeiten von Unterbis Hyperschall, bestehend aus einem Turboluftstrahltriebwerk, einem außenluftunabhängigen Raketentriebwerk und ggf. einem Staustrahltriebwerk, zu schaffen, welcher besonderes raum- und gewichtssparend, einfach und zuverlässig ist.

Diese Aufgabe wird durch die im Patentanspruch 1 gekennzeichneten Merkmale gelöst.

Am Raketentriebwerk ist ein mit Brennstoffüberschuß betriebener Gasgenerator angeordnet, welcher im

2

Turbobetrieb die Treibgase für die Turbinengruppe des Turboluftstrahltriebwerkes (Air-Turbo-Rocket) erzeugt und welcher im Raketenbetrieb als Vorbrennkammer des Raketentriebwerkes arbeitet. Zu diesem Zweck ist er mit zwei wahlweise betätigbaren Verschlußeinrichtungen versehen.

Die Turbinen- und die Verdichtergruppe des Turboluftstrahltriebwerkes bestehen aus einer identischen Anzahl von gegenläufig arbeitenden Laufrädern ohne zwischengeschaltete Leiträder. Je ein Turbinenlaufrad bildet mit je einem Verdichterlaufrad einen freilaufenden, integralen Rotor, wobei die Turbinenschaufeln radial innerhalb oder außerhalb der Verdichterschaufeln angeordnet sein können. Durch diese Bauweise entfallen Antriebswellen und Lagerstellen; Gewicht, Platzbedarf und konstruktiver Aufwand sind minimal. Durch die gegenläufige, leitschaufellose Ausführung der Rotoren ist es möglich, den Verdichter im Staustrahlbetrieb mit geringen Strömungsverlusten im "Windmilling", d.h. freilaufend arbeiten zu lassen, ohne die Verdichterschaufeln verstellen zu müssen. Diese nicht-verstellbare Bauweise bringt erhebliche Vorteile hinsichtlich Gewicht, Festigkeit, Zuverlässigkeit und Bauaufwand, was u.a. auch zu einer Kosteneinsparung führt.

Der Austrittskanal der Turbinengruppe ist zur Brennkammer des Turboluftstrahltriebwerkes hin als Mischvorrichtung ausgeführt, welche die brennstoffreichen Turbinentreibgase mit der Außenluft vermengt. Nach erfolgter Zündung des Gas-/Luftgemisches hat der Austrittskanal auch die Funktion eines Flammhalters.

Die Unteransprüche 2 bis 6 enthalten bevorzugte Ausführungsformen des Kombinationsantriebes nach Anspruch 1.

Die Erfindung wird nachfolgend anhand der in der Zeichnung dargestellten Ausführungsbeispiele noch näher erläutert. Dabei zeigen in schematischer Darstellung:

Fig. 1 oberhalb der Mittellinie die Arbeitsweise des Kombinationsantriebes im Turbobetrieb, unterhalb der Mittellinie die Arbeitsweise im Raketenbetrieb,

Fig. 2 die Arbeitsweise einer anderen Bauart des Kombinationsantriebes im Turbo- und Raketenbetrieb.

Der erfindungsgemäße Kombinationsantrieb besteht mindestens aus einem außenluftunabhängigen Raketentriebwerk und einem Turboluftstrahltriebwerk, wobei letzteres als Air-Turbo-Rocket ausgeführt ist. Im Bedarfsfall kann als drittes Triebwerk ein Staustrahltriebwerk integriert sein, welches denselben Strömungskanal benutzt wie das Turboluftstrahltriebwerk. Somit stimmen beide luftatmende Triebwerke bezüglich des Einlauf- bzw. Verdichterbereiches, der Brennkammer und der Schubdüse überein. Der Staustrahlbetrieb setzt allerdings eine spezielle Ausführung des Lufteinlaufes als Überschall-/Unterschalldiffusor voraus. Am günstigsten dürfte ein in weiten Grenzen verstellbarer Einlauf sein, welcher sich an die Erfordernisse beider Betriebsarten anpassen läßt. Wichtig ist auch, daß der im Staustrahlbetrieb freilaufende Turboverdichter keine zu hohen Strömungs- und damit Druckverluste verursacht. Eine weitere Voraussetzung für Staustrahlbetrieb ist natürlich auch das Vorhandensein einer Vorrichtung zur Brennstoffzufuhr im Bereich der gemeinsamen Turbo-/Staustrahlbrennkammer.

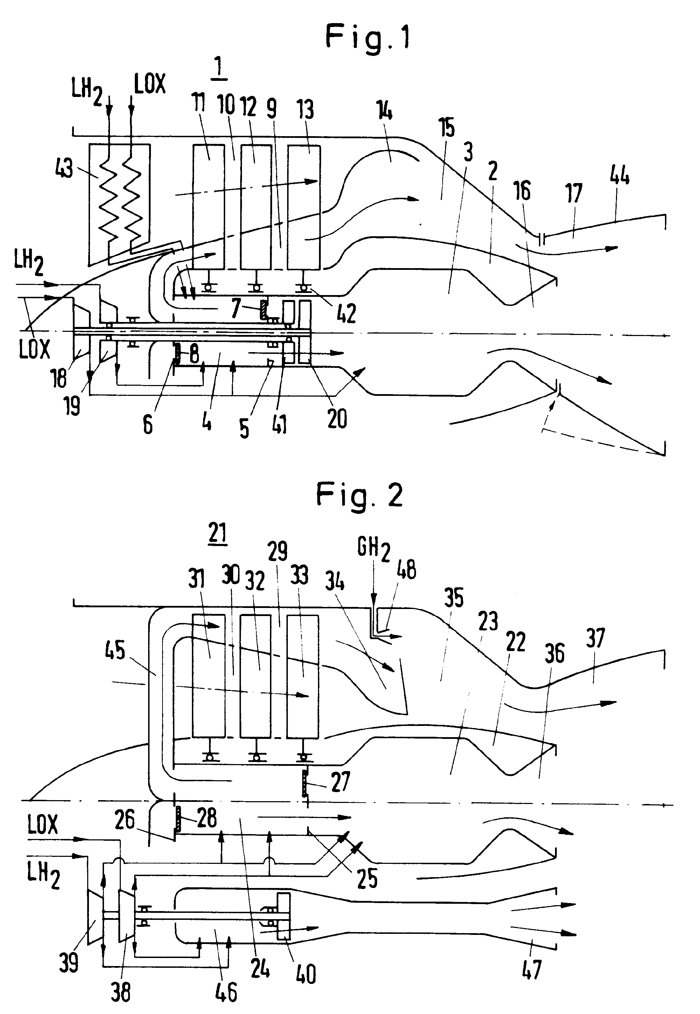

Der Kombinationsantrieb 1 nach Fig. 1 verwendet ein als Hauptstromtriebwerk ausgeführtes Raketentriebwerk. Dies bedeutet, daß die Turbinentreibgase, welche für den Antrieb der Treibstoffpumpen 18 und 19 benötigt werden, durch die Raketenbrennkammer 3 und die Schubdüse 16 strömen und somit direkt zur Schuberzeugung beitragen. Im vorliegenden Fall ist eine zweiwellige Turbinen-/Pumpenanordnung dargestellt. Anstelle der beiden Turbinen 20 und 41 kann aber auch eine Turbine beide Pumpen antreiben. Der Gasgenerator 4 hat erfindungsgemäß eine doppelte Funktion. Im Raketenbetrieb, welcher unterhalb der Mittelline dargestellt ist, dient er als Vorbrennkammer für das Raketentriebwerk 2 und liefert die Treibgase für die Turbinen 20 und 41, welche die Treibstoffpumpen 18 und 19 für flüssigen Sauerstoff (LOX) und flüssigen Wasserstoff (LH$_2$) antreiben. Der Gasgenerator 4 arbeitet mit Brennstoffüberschuß (LH$_2$), so daß zur stöchiometrischen Verbrennung LOX in die Raketenbrennkammer 3 eingespritzt werden muß. Der Gasgenerator 4 besitzt am vorderen und hinteren Ende je eine Verschlußeinrichtung, welche aus einer Lochblende 5 bzw. 6 und einem Drehschieber 7 bzw. 8 besteht. Durch Winkelbewegungen des Drehschiebers werden die über den Umfang der Lochblende mit entsprechenden Abständen verteilten Öffnungen freigegeben oder verschlossen. Lochblende und Drehschieber besitzen eine vergleichbare Kontur, bei welcher Stege und Öffnungen in Umfangsrichtung abwechseln. Natürlich können auch andere Verschlußeinrichtungen verwendet werden, z.B. solche, welche - nach Art eines verstellbaren Leitschaufelgitters - mit um radiale Achsen verschwenkbaren Klappen arbeiten, welche in Strömungsrichtung und quer dazu gestellt werden können.

Im Raketenbetrieb ist die vordere Verschlußeinrichtung geschlossen, die Treibgase treten nur nach hinten aus.

Im Turbobetrieb, dargestellt oberhalb der Mittellinie, ist die hintere Verschlußeinrichtung dicht, die brennstoffreichen Treibgase treten nach vorne aus dem Gasgenerator 4 aus. Sie werden um annähernd 180° umgelenkt und treten dann in die Turbinengruppe 9 ein, welche radial innerhalb der Verdichtergruppe 10 angeordnet ist. Jedes der Turbinenlaufräder ist mit einem Verdichterlaufrad zu einem freilaufenden Rotor vereinigt, wobei hier beispielhaft drei Rotoren 11, 12 und 13 dargestellt sind, welche auf Wälzlagern 42 laufen. Die Beschaufelung ist fest und so ausgerichtet, daß die Rotoren gegenläufig arbeiten. Zwischen den Rotoren 11, 12 und 13 sind keine Leitschaufelkränze vorhanden; es kann aber sinnvoll sein, z.B. vor der Turbinengruppe 9 und/oder hinter der Verdichtergruppe 10 Leitschaufeln vorzusehen. Die Hauptvorteile der erfindungsgemäßen Turbinen-/Vedicherbauweise (integral, gegenläufig, leitschaufellos) liegen in ihrem geringen Gewicht, ihrer Kompaktheit, ihren geringen mechanischen Verlusten sowie ihren relativ kleinen Strömungsverlusten im "Windmilling"-Betrieb, d.h. im Leerlauf.

Nach Austritt aus der Turbinengruppe 9 gelangen die brennstoffangereicherten Treibgase in den Sektorgasverteiler 14, welcher die Aufgabe hat, diese mit der zuströmenden Außenluft zu mischen, um eine vollständige, stöchiometrische Verbrennung in der Brennkammer 15 zu ermöglichen. Der Sektorgasverteiler 14 schließt an den kreisringförmigen Turbinenaustritt an und besteht aus einer nach hinten offenen, in Umfangsrichtung gewellten Wandstruktur. Dabei wechseln radial weit in den Strömungskanal hineinstehende Bereiche regelmäßig mit radial nach innen versetzten Bereichen ab, so daß - bei Ansicht in Achsrichtung - die Außenkontur des Sektorgasverteilers 14 einem Zahnrad oder einer Blüte ähnelt. Neben seiner Funktion als Mischer dient er zugleich als Flammhalter und bildet die vordere Begrenzung der Brennkammer 15. Die Abgase der Brennkammer 15 treten über die konvergent-divergente Schubdüse 17 ins Freie aus. Der divergente Teil 44 der Schubdüse 17 ist querschnittsveränderlich ausgeführt und besteht beispielsweise aus einer Vielzahl von Düsensegmenten, welche um das hintere Düsenende schwenkbar sind. Im Raketenbetrieb in großen Flughöhen, d.h. bei geringem Außendruck und starker Strahlexpansion, wird der Teil 44 so an die Schubdüse 16 des Raketentriebwerkes 2 angelegt, daß er diese strömungsmechanisch verlängert, wie in der unteren Bildhälfte von Fig. 1 dargestellt.

Bei Raketenbetrieb in mäßigen Flughöhen mit höherem Umgebungsluftdruck genügt die Schubdüse 16 für eine ausreichende Gasexpansion. In diesem Fall kann die Schubdüse 17 im Halsbereich so weit geöffnet bleiben wie im Turbo- oder Staustrahlbetrieb, um zur Schüberhöhung dem Raketenstrahl ejektorartig Außenluft zuzumischen.

Im Staustrahlbetrieb wird der Gasgenerator 4 abgeschaltet, die Rotoren 11, 12 und 13 laufen im Windmilling-Betrieb. Im Bereich des Sektorgasverteilers 14 wird Brennstoff, vorzugsweise gasförmig, zugeführt und mit Stauluft in der Brennkammer 15 verbrannt.

Da die Turbinen 20 und 41 nur im Raketenbetrieb laufen, muß für Turbound Staustrahlbetrieb ein zusätzliches Treibstoffversorgungssystem vorhanden sein. Dabei kann es genügen, die vorhandenen Treibstoffpumpen 18 und 19 mit Freiläufen und zusätzlichen Antrieben zu versehen.

Der Luftkühler 43 wird zumindest von Teilmengen der kryogenen Treibstoffe LOX und $LH_2$ durchströmt und hat die Aufgabe, die zuströmende Außenluft durch Abkühlung weiter zu verdichten und dabei deren Massenstrom zu vergrößern. Die erwärmten Treibstoffströme können direkt dem Gasgenerator 4 oder anderen Verbrauchern zugeführt werden.

Der Luftstrom ist in beiden Figuren übrigens durch einen strichpunktierten Pfeil wiedergegeben.

Der Kombinationsantrieb 21 nach Fig. 2 unterscheidet sich in zwei wesentlichen Merkmalen von demjenigen nach Fig. 1, und zwar in der Bauart des Raketentriebwerkes sowie in der Bauweise der Verdichter-/Turbinengruppe.

Das Raketentriebwerk 22 ist als Nebenstromtriebwerk augeführt, d.h. die Treibgase für die Turbine 40 zum Antrieb der Treibstoffpumpen 38 und 39 werden in einem separaten Gasgenerator 46 erzeugt und in einer zusätzlichen, kleinen Schubdüse 47 beschleunigt.

Erfindungsgemäß ist auch hier ein Gasgenerator 24 vorhanden, welcher einerseits als Vorbrennkammer des Raketentriebwerkes 22, andererseits als Treibgaserzeuger für die Turbinengruppe 29 der Air-Turbo-Rokket arbeitet. Die Verschlußeinrichtungen bestehen auch hier aus Lochblenden 25, 26 sowie aus Drehschiebern 27, 28. Wie bereits zu Fig. 1 erwähnt, sind auch andere Konstruktionen anwendbar. Im Turbobetrieb (obere Bildhälfte) werden die Treibgase aus dem Gasgenerator 24 über mehrere Gasleitrohre zum Außenumfang des Rotors 31 geleitet. Die Turbinengruppe 29 befindet sich also radial außerhalb der Verdichtergruppe 30, wobei die integrale Verbindung von Turbinen- und Verdichterschaufeln erfindungsgemäß auch hier gegeben ist. Somit kommt das Prinzip der "Tip-mounted Turbine" zur Anwendung, mit welchem sich bei begrenzter Treibgasenergie das Turbinendrehmoment steigern läßt. Die Rotoren 31, 32 und 33 arbeiten auch in diesem Falle gegenläufig und ohne zwischengeschaltete Leitschaufelkränze, wobei jeder für sich frei drehbar gelagert ist.

Der Sektorgasverteiler 34, welcher sich an den kreisringförmigen Turbinenauslaß anschließt, besitzt bei dieser Bauart in Umfangsrichtung eine gewellte Unnenkontur, welche den Luftströmungsquerschnitt in regelmäßigen Winkelabständen einmal mehr und einmal weniger nach innen einschnürt. Er bildet das stromaufwärtige Ende der Brennkammer 35, an welche sich die konvergent-divergente Schubdüse 37 anschließt.

Für Staustrahlbetrieb oder auch zum Einbringen zusätzlichen Brennstoffes bei Turbobetrieb sind im Bereich des Sektorgasverteilers 34 Brennstoffdüsen 48 angeordnet, von denen eine gezeigt ist. Die Abkürzung "$GH_2$" deutet an, daß der Brennstoff, hier Wasserstoff, vorzugsweise in gasförmigem Zustand zugemischt wird. Solche Brennstoffdüsen können natürlich auch in der Anordnung nach Fig. 1 vorgesehen sein.

Die in Fig. 2 dargestellte Treibstoffverteilung läßt auch einen Parallelbetrieb des Raketentriebwerkes 22 und des Turboluftstrahltriebwerkes zu. Der Gasgenerator 24 ist dabei zur Raketenbrennkammer 23 hin verschlossen und liefert nur die Treibgase für die Turbinengruppe 29. In die Raketenbrennkammer 23 werden LOX und $LH_2$ in stöchiometrischem Verhältnis eingespritzt, das Raketentriebwerk 22 arbeitet dann ohne Vorbrennkammer.

Ein paralleler Staustrahl- und Raketenbetrieb ist in den Ausführungen nach Fig. 1 und 2 möglich, falls im Bereich der Sektorgasverteiler 14 bzw. 34 Brennstoffzufuhreinrichtungen vorhanden sind. Dabei arbeiten die Raketentriebwerke mit Vorbrennkammern.

Es sei darauf hingewiesen, daß auch bei der Ausführung nach Fig. 2 ein oder mehrere Luftkühler vorgesehen sein können.

Ebenso wird darauf hingewiesen, daß beide Turbinen-/Verdichterbauarten mit beiden Raketentriebwerksbauarten kombiniert werden können.

## Patentansprüche

1. Kombinationsantrieb für Fluggeschwindigkeiten von Unter- bis Hyperschall, insbesondere für Betrieb mit flüssigem Wasserstoff ($LH_2$) und flüssigem Sauerstoff (LOX), mit einem außenluftunabhängigen Raketentriebwerk, mit einem das Raketentriebwerk koaxial umschließenden Turboluftstrahltriebwerk, dessen Verdichter von mindestens einer außenluftunabhängigen Turbine angetrieben wird, oder mit einem Turboluftstrahltriebwerk und mit einem Staustrahltriebwerk, welches hinsichtlich des Einlauf- und Verdichterbereiches, der Brennkammer und der Schubdüse mit dem Turboluftstrahltriebwerk identisch ist, **dadurch** gekennzeichnet, daß am Raketentriebwerk (2; 22) ein mit Brennstoffüberschuß betriebener Gasgenerator (4; 24) mit zwei Verschlußeinrichtungen, bestehend beispielsweise aus Lochblenden (5, 6; 25, 26) und Drehschiebern (7, 8; 27, 28) angeordnet ist, welche wahlweise eine strömungsmechanische Verbindung zu einer Raketenbrennkammer (3; 23) oder zu einer Turbinengruppe (9; 29) des Turboluftstrahltriebwerkes herstellen, wobei die Turbinengruppe (9; 29) und eine Verdichtergruppe (10; 30) aus mehreren gegenläufig arbeitenden Laufrädern ohne zwischengeschaltete Leiträder bestehen, wobei jedes Turbinenlaufrad mit je einem Verdichterlaufrad des Turboluftstrahltriebwerkes einen freilaufenden Rotor (11, 12, 13; 31, 32, 33) bildet, und die Turbinenschaufeln radial innerhalb oder außerhalb der Verdichterschaufeln angeordnet sind, und daß der Austrittskanal der Turbinengruppe (9; 29) zur Brennkammer (15; 35) des Turboluftstrahltriebwerkes hin als Sektorgasverteiler (14; 34) zum Vermischen der Turbinentreibgase mit der zuströmenden Außenluft ausgeführt ist.

2. Kombinationsantrieb nach Anspruch 1, **dadurch gekennzeichnet,** daß der divergente Teil (44) der konvergent-divergenten Schubdüse (17) des Turboluftstrahltriebwerkes zumindest im Eintrittsbereich querschnittsveränderlich ausgeführt ist und bei minimalem Eintrittsdurchmesser an den Austrittsquerschnitt der Schubdüse (16) des Raketentriebwerkes (2) zu deren Verlängerung angelegt werden kann.

3. Kombinationsantrieb nach Anspruch 1 oder 2, **dadurch** gekennzeichnet, daß im Mischbereich der Turbinentreibgase und der Außenluft oder zwischen der Turbinengruppe (29) und dem Sektorgasverteiler (34) mindestens eine Brennstoffdüse (48) für die Zufuhr von Brennstoff angeordnet ist.

4. Kombinationsantrieb nach einem oder mehreren der Ansprüche 1 bis 3, **dadurch gekennzeichnet,** daß stromaufwärts der Verdichtergruppe (10) des Turboluftstrahltriebwerkes mindestens ein Luftkühler (43) angeordnet ist, welcher von mindestens einem kryogenen Treibstoff durchströmt wird.

5. Kombinationsantrieb nach einem oder mehreren der Ansprüche 1 bis 4, **dadurch gekennzeichnet,** daß das Raketentriebwerk (2) als Hauptstromtriebwerk ausgeführt ist, wobei im Strömungskanal vom Gasgenerator (4) zur Raketenbrennkammer (3) mindestens eine Turbine (20, 41) zum Antrieb der Treibstoffpumpen (18, 19) für Raketenbetrieb angeordnet ist.

6. Kombinationsantrieb nach einem oder mehreren der Ansprüche 1 bis 4, **dadurch gekennzeichnet,** daß das Raketentriebwerk (22) als Nebenstromtriebwerk ausgeführt ist, wobei zum Antrieb der Turbine (40) für die Treibstoffpumpen (38, 39) ein zusätzlicher, mit Teilströmen der Treibstoffe betriebener Gasgenerator (46) vorhanden ist.

## Revendications

1. Système de propulsion combiné pour vitesses de vol allant du domaine subsonique au domaine hypersonique, notamment pour le fonctionnement avec de l'hydrogène liquide ($LH_2$) et de l'oxygène liquide (LOX), comportant un moteur-fusée anaérobie, un turboréacteur qui entoure le moteur-fusée et est coaxial avec celui-ci et dont le compresseur est entraîné par au moins une turbine anaérobie, ou comportant un turboréacteur et un statoréacteur qui est identique au turboréacteur en ce qui concerne la zone d'entrée d'air et du compresseur, la chambre de combustion et la tuyère, **caractérisé en ce qu'**un générateur de gaz (4, 24) fonctionnant avec excès d'air est disposé dans le moteur-fusée (2; 22), lequel générateur est muni de deux dispositifs d'obturation qui sont formés par exemple de plaques perforées (5, 6; 25, 26) et d'obturateurs rotatifs (7, 8; 27, 28) et établissent de manière sélective une communication fluidique avec une chambre de combustion de fusée (3; 23) ou avec un groupe turbine (9; 29) du turboréacteur, le groupe turbine (9; 29) et un groupe compresseur (10; 30) étant formés de plusieurs roues qui tournent en sens contraire, sans distributeurs intermédiaires, chaque roue de turbine formant un rotor (11, 12, 13; 31, 32, 33) libre avec une roue de compresseur et les ailettes de turbine étant disposées radialement à l'intérieur ou à l'extérieur des ailettes de compresseur et en ce que le conduit de sortie du groupe turbine (9; 29) menant à la chambre de combustion (15; 35) du turboréacteur est agencé sous forme de distributeur de gaz à secteurs (14; 34) afin de mélanger les gaz d'entraînement de la turbine avec l'air extérieur entrant.

2. Système de propulsion combiné selon la revendication 1, **caractérisé en ce que** la section de la partie divergente (44) de la tuyère (17) convergente-divergente du turboréacteur est variable dans sa région d'entrée au moins et, lorsque le diamètre d'entrée est minimal, peut appliquée contre la section de sortie de la tuyère (16) du moteur fusée (2) afin de prolonger celle-ci.

3. Système de propulsion combiné selon la revendication 1 ou 2, **caractérisé en ce qu'**au moins un injecteur de combustible (48) pour l'amenée de combustible est disposé dans la zone de mélange des gaz d'entrainement de la turbine avec l'air extérieur ou entre le groupe turbine (29) et le distributeur de gaz à secteurs (34).

4. Système de propulsion combiné selon une ou plusieurs des revendications 1 à 3, **caractérisé en ce qu'**au moins un réfrigérant d'air (43) est placé en amont du groupe compresseur (13), lequel réfrigérant est parcouru par au moins propergol cryogènique.

5. Système de propulsion combiné selon une ou plusieurs des revendications 1 à 4, **caractérisé en ce que** le moteur-fusée (2) est agencé en propulseur à flux principal, au moins une turbine (20, 41) qui entraîne les pompes à propergols (18, 19) pour le fonctionnement en mode fusée étant disposée dans le conduit d'écoulement menant du générateur de gaz (4) à la chambre de combustion de fusée (3).

6. Système de propulsion combiné selon une ou plusieurs des revendications 1 à 4, **caractérisé en ce que** le moteur-fusée est agencé en propulseur à flux secondaire, un générateur de gaz (46) supplémentaire qui utilise des débits partiels des propergols étant prévu pour l'entraînement de la turbine (40) pour les pompes à propergols (38, 39).

## Claims

1. Combination drive for airspeedes in the range from subsonic to hypersonic, in particular for operation with liquid hydrogen (LH$_2$) and liquid oxygen (LOX), with an atmospheric air independent rocket engine, with a turbojet engine which coaxially surrounds the rocket engine and the compressor of which is driven by at least one atmospheric air independent turbine, or with a turbojet engine and with a ramjet engine which is identical with the turbojet engine with respect to the intake and compressor region, the combustion chamber and the thrust nozzle, **characterised in that** at the rocket engine (2; 22) is arranged a gas generator (4; 24), which is operated by surplus fuel and which is provided with two closing means, for example composed of aperture diaphragms (5, 6; 25, 26) and rotary slides (7, 8; 27, 28), which selectively establish a flow-mechanical connection to a rocket combustion chamber (3; 23) or to a turbine group (9; 29) of the turbojet engine, whereby the turbine group (9; 29) and a compressor group (10, 30) are composed of several contra-rotating impellers without guide wheels thereinbetween, whereby each turbine impeller and a respective compressor impeller of the turbojet engine form a free running rotor (11, 12, 13; 31, 32, 33), and the turbo blades are arranged radially within or outside the compressor blades, and that the outlet channel of the turbine group (9; 29) towards the combustion chamber (15; 35) of the turbojet engine is constructed as a sector gas distributor (14; 34) for mixing turbine propellant gases with inflowing ambient air.

2. Combination drive according to claim 1, **characterised in that** the divergent part (44) of the convergent-divergent thrust nozzle (17) of the turbojet engine is arranged to be cross-sectionally changeable at least in the inlet area and is installed with minimal inlet diameter at the outlet cross-section of the thrust nozzle (16) of the rocket engine (2) as its extension.

3. Combination drive according to claim 1 or 2, **characterised in that** at least one fuel nozzle (48) for the supply of fuel is disposed in the mixing area of turbine fuel gases and ambient air or between the turbine group s(29) and the sector gas distributor (34).

4. Combination drive according to one or more of claims 1 to 3, **characterised in that** upstream of the compressor group (10) of the turbojet engine is arranged at least one air cooler (43) which is flowed through by at least one cryogenic fuel.

5. Combination drive according to one or more of claims 1 to 4, **characterised in that** the rocket engine (2) is arranged as main-stream engine, whereby in the flow channel between gas generator (4) and rocket combustion chamber (3) is disposed at least one turbine (20, 41) for driving the fuel pumps (18, 19) for rocket operation.

6. Combination drive according to one or more of claims 1 to 4, **characterised in that** the rocket engine (22) is arranged as a bypass engine, and an additional gas generator (46) operated by partial flows of fuel is provided for driving the turbine 40 for the fuel pumps (38, 39).

# Fig.1

# Fig. 2